(19) Europäisches Patentamt
European Patent Office
Office européen des brevets

(11) **EP 4 523 313 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **23725970.0**

(22) Anmeldetag: **08.05.2023**

(51) Internationale Patentklassifikation (IPC):
*H02K 1/276* (2022.01)    *H02K 1/2791* (2022.01)
*H02K 1/2789* (2022.01)    *H02K 9/22* (2006.01)
*H02K 1/32* (2006.01)    *B33Y 80/00* (2015.01)

(52) Gemeinsame Patentklassifikation (CPC):
**H02K 1/2773; B33Y 80/00; H02K 1/2789;
H02K 1/2791; H02K 1/32; H02K 9/227;
H02K 2201/06**

(86) Internationale Anmeldenummer:
**PCT/EP2023/062106**

(87) Internationale Veröffentlichungsnummer:
**WO 2023/217693 (16.11.2023 Gazette 2023/46)**

(54) **FLUIDGEKÜHLTE, MEHRPHASIGE PERMANENTERREGTE SYNCHRONMASCHINE**

FLUID-COOLED, MULTI-PHASE PERMANENTLY EXCITED SYNCHRONOUS MACHINE

MACHINE SYNCHRONE À EXCITATION PERMANENTE MULTIPHASE REFROIDIE PAR UN FLUIDE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.05.2022 DE 102022111442**

(43) Veröffentlichungstag der Anmeldung:
**19.03.2025 Patentblatt 2025/12**

(73) Patentinhaber: **eMoSys GmbH**
**82319 Starnberg (DE)**

(72) Erfinder:
• **GRUENDL, Andreas**
**82319 Starnberg (DE)**
• **RASCH, Michael**
**82131 Gauting (DE)**
• **ECK, Stephan**
**82346 Andechs (DE)**

(74) Vertreter: **Schmidt, Steffen J.**
**Wuesthoff & Wuesthoff**
**Patentanwälte und Rechtsanwalt PartG mbB**
**Schweigerstrasse 2**
**81541 München (DE)**

(56) Entgegenhaltungen:
| | |
|---|---|
| EP-A1- 3 349 331 | EP-A1- 3 496 236 |
| EP-A2- 3 618 236 | EP-B1- 3 231 070 |
| WO-A1-2014/039751 | CN-A- 102 201 718 |
| DE-A1- 102016 218 872 | JP-A- 2020 521 425 |
| US-A1- 2019 123 620 | US-B1- 6 175 177 |

## Beschreibung

Hintergrund

Hier wird eine fluidgekühlte, mehrphasige permanentmagneterregte Synchronmaschine (PMSM) offenbart. Diese ist auch in einer Anwendung als elektrischer Flugzeugantrieb einzusetzen. Ein solcher Flugzeugantrieb ist Teil eines Flugzeug-Antriebsstrangs und umfasst eine solche fluidgekühlte, mehrphasige permanenterregte Synchronmaschine. Weitere Baugruppen des Flugzeug-Antriebsstrangs sind eine elektrische Energiequelle, die als Akkumulator, Photovoltaikanordnung und/oder als ein Brennstoffzellenaggregat ausgestaltet sein kann, und die den elektrischen Flugzeugantrieb mit elektrischer Energie speist, sowie optional ein (Untersetzungs-)Getriebe, das zwischen dem elektrischen Flugzeugantrieb und einer Luftschraube, einem Propeller, einer Turbine oder Vergleichbarem eingekoppelt ist. Details hierzu sind in den Ansprüchen definiert; aber auch die Beschreibung enthält relevante Angaben zur Struktur und zur Funktionsweise sowie zu Varianten der Maschine. Maschinen der hier offenbarten Art sind als Hochleistungsantriebe mit einem Leistungsgewicht von 10kW/kg - 25kW/kg zu realisieren.

Als elektrische Maschine sind hier sowohl motorisch als auch generatorisch betriebene Maschinen verstanden, als auch Maschinen, die zwischen diesen beiden Betriebsarten wechselnd betrieben werden.

Elektrische Maschinen haben einen Ständer und einen Läufer. Der Läufer wird durch magnetische Wechselwirkung mit dem Ständer angetrieben. Die dabei im Betrieb entstehenden magnetischen Wechselfelder in den Maschinenkomponenten führen zur Entstehung von Wirbelströmen. Die Wirbelströme rufen in dem Ständer und dem Läufer Wärme hervor. Hysterese- und Um-Magnetisierungsverluste führen in Blechpaketen von Ständer und Läufer zu einer Wärmeentwicklung. Ist die Wärmeentwicklung zu hoch, kann diese Komponenten der Maschine schädigen. Insbesondere ist bei permanentmagneterregten elektrischen Maschinen zur Aufrechterhaltung der Magnetisierung die Betriebstemperatur zu begrenzen, um eine Entmagnetisierung zu reduzieren oder zu verhindern.

Bislang werden zur Kühlung bei klein bauenden elektrischen Maschinen, wie beispielsweise Antriebsmaschinen für Fahrzeugantriebe, üblicherweise eine Ständermantelkühlung mit Kühlwasser oder Öl als Kühlmedium sowie optional eine Läuferkühlung mit Luft oder Öl als Kühlmedium verwendet.

Bisherige Kühlsysteme leiten ein Kühlmedium durch die elektrische Maschine, um dort Betriebswärme aufzunehmen. Das so erwärmte Kühlmedium wird aus der elektrischen Maschine herausgeführt und dort passiv oder aktiv abgekühlt, um der elektrischen Maschine erneut zugeführt zu werden.

Eine elektrische Maschine mit Kühlung ist aus der DE 10 2014 216 241 A1 bekannt. Hierbei hat eine Rotoranordnung der Maschine eine Kältemittelleitung mit einer Querschnittserweiterung, um einen Phasenübergang eines durchgeleiteten Kältemittels zu bewirken. Die Rotoranordnung hat einen Permanentmagneten, an den ein Verdampfungskanal der Kältemittelleitung angeordnet ist. Die Querschnittserweiterung ist durch eine Aufteilung der Kältemittelleitung oder durch eine Erweiterung der Kältemittelleitung realisiert. Der Kältemittelleitung wird flüssiges Kältemittel zugeführt. Die Kältemittelleitung mündet im Innern des Gehäuses, das mit einer Abführleitung versehen ist, um entspanntes Kältemittel aus dem Gehäuse abzuführen. Die Kältemittelleitung hat einen axial entlang der Rotorwelle verlaufenden Zuführkanal, und mehrere radial verlaufende Verteilungskanäle und mehrere Verdampfungskanäle. Die WO 2007/119952 A1 beschreibt Aufnahmeelemente zur Aufnahme von bevorzugt trapezförmig ausgestalteten Permanentmagneten, die formschlüssig in korrespondierende Schwalbenschwanznuten eines Läuferelements einbringbar sind. Hieraus ergibt sich allerdings das Problem, dass die durch die Umdrehung des Läufers entstehende Krafteinwirkung der Magneten auf die Aufnahmeelemente bzw. die Seitenkanten der Schwalbenschwanznuten nur unzureichend kompensiert werden kann, was nach einiger Laufzeit des Läufers zum Bruch der Permanentmagnete führen kann.

Die DE 10 2008 023 999 A1 offenbart eine Vorrichtung zur Halterung von Magneten in einem bewegten Bauteil, insbesondere in einem Blechpaket eines Läufers eines Elektromotors, mit einer Haltetasche, in die ein Magnet eingesetzt ist, der mittels eines Klebers befestigt ist. Der Klebers dehnt sich beim Aushärten in einem vorbestimmten Ausmaß aus und enthält Treibmittel zum Aufschäumen eines Klebstoffs. Nachteilig hierbei ist, dass die Permanentmagneten in den fest im Läuferpaket integrierten, durch Stanztechnik hergestellten Haltetaschen eingefasst sind. Dies resultiert einerseits in einer geringen Flexibilität bei der Montage eines entsprechenden Läufers. Andererseits können Spannungen, die aufgrund von Zentrifugalkräften und unterschiedlicher Wärmeausdehnungskoeffizienten der Magnete und des Läuferkerns auftreten, durch den Klebstoff nur begrenzt kompensiert werden.

Die JP 2020 521425 A offenbart einen fluidgekühlten Rotor einer permanenterregten Synchronmaschine, wobei der Rotor ein Netzwerk aus Kanälen zur Zirkulation eines flüssigen Kühlmittels aufweist. Diese Kanäle sind so angeordnet, dass sie das flüssige Kühlmittel von der zentralen Kammer im Zentrum des Rotors zu jedem Paar peripherer Kammern leiten, wobei jede der peripheren Kammern radial außerhalb des Zentrums und innerhalb eines Paars entsprechender Magnete angeordnet ist.

Die EP 3 231 070 B1 offenbart eine permanenterregte elektrische Maschine mit einem Ständer und einem Läufer. Der Läufer ist mit Permanentmagnet-Elementen versehen, und ein praktisch unmagnetischer Läuferrücken trägt an der radial außen liegenden Außenseite mehrere benachbarte, magnetisch leitende Magnetfluss-Pole. Jeder Magnetfluss-Pol hat eine in axialer Richtung hohlprismatische Gestalt mit mehreren Kühlkanälen. Diese Kühlkanäle sind für die Durchströmung mit einem Kühlfluid eingerichtet.

Die EP 3 618 236 A2 offenbart eine permanenterregte elektrische Maschine mit einem Ständer und einem Läufer die für hohe Drehzahlen auslegbar ist. Der Läufer ist mit Permanentmagnet-Elementen versehen und umfasst einen praktisch unmagnetischen Läuferrücken, der an seiner radial außen liegenden Außenseite mehrere benachbarte Magnetfluss-Pole trägt. Die Magnetfluss-Pole haben eine in axialer Richtung hohlprismatische Gestalt mit Kühlkanälen. Jeder Kühlkanal ist zur Durchströmung mit einem Kühlfluid eingerichtet.

Die US 6 175 177 B1 offenbart eine permanenterregte Synchronmaschine mit einem ferromagnetischen Körper und einer darin enthaltenen Anordnung von Permanentmagneten. Die Permanentmagnete sind in Umfangsrichtung abwechselnd mit den laminierten Zähnen angeordnet, wobei diese laminierten Zähne Öffnungen aufweisen.

Die EP 3 349 331 A1 offenbart einen Läufer eines Elektromotors, der einen Läuferkern und Magnete aufweist, die durch einen Läuferrahmen fixiert sind.

Die Läuferkerne und die Magnete sind in Umlaufrichtung abwechselnd angeordnet.

Der Läuferrahmen besteht aus radial nach außen verlaufenden Rippen und Querrippen, die die radialen Rippen kreuzen. Zwischen den radialen Rippen und den Querrippen entstehen so vertikale Durchgänge, durch die Luft strömt und den Läufer kühlt.

Die US 2019/123620 A1 offenbart einen Elektromotor, wobei ein Wärmetransport innerhalb des elektromagnetischen Kerns der Magnete durch Einfügen einer Graphitschicht erfolgt.

Die WO 2014/039751 A1 offenbart einen Läufer eines Elektromotors mit einem, die Permanentmagnete aufnehmenden, Laminatpaket, wobei einzelne Schichten dieses Laminatpakets Wärmeleitschichten sind.

Die CN 102 201 718 B offenbart einen Läufer eines Elektromotors mit Magneten und Blechen die eine hohe Wärmeleitfähigkeit aufweisen und an beiden Enden in axialer Richtung der Magneten angebracht sind und bis zu der Welle reichen.

Die DE 10 2016 218872 A1 beschreibt den Aufbau eines elektrischen Gondelantriebes für ein Schiff mit einem Stator und einem Rotor, wobei der Rotor die Wärme über äußere Wärmesammler und radiale Wärmeleiter nach innen in den Rotor führt. Die Wärmeleiter leiten die Wärme zu einem Verdampfer einer Heatpipe, die sich in der Hohlwelle des Rotors befindet.

## Zugrundeliegendes Problem

Der vorliegenden Lösung liegt das Problem zugrunde, eine hocheffiziente elektrische Maschine mit sehr gutem Leistungsgewicht (Nutzleistung/Gewicht) und minimalem Bauraum bereitzustellen.

## Lösung

Diese Aufgabe wird durch eine elektrische Maschine gemäß Anspruch 1 gelöst.

Insbesondere ist hier eine fluidgekühlte, mehrphasige permanenterregte Synchronmaschine angegeben, mit einem Ständer und einem Läufer in Innen- oder Außenläuferkonfiguration.

Der Ständer hat zu bestromende Feldspulen, und der Läufer hat Permanentmagnet-Elemente. Der Ständer ist unter Bildung eines Luftspaltes von dem Läufer radial beabstandet. Der Läufer hat wenigstens einen die Permanentmagnet-Elemente und weichmagnetische Läuferzahn-Elemente tragende, zumindest nahezu unmagnetischen Träger. Von der vom Luftspalt abliegenden Seite der Permanentmagnet-Elemente und/oder der Läuferzahn-Elemente bis nahe an die Läuferwelle reicht wenigstens eine Wärmeleitschicht.

Der Läufer hat nahe der Läuferwelle ihn durchdringende Kühlfluid-Kanäle. Die Läuferwelle hat mit den Kühlfluid-Kanälen des Läufers verbundene Kühlfluid-Zu- und/ oder - Abführleitungen.

Die Anordnung der Wärmeleitschicht als Transportmedium für die Wärmeenergie von den radial weiter außen liegenden Permanentmagnet-Elementen zu dem durch die radial weiter innen liegenden Bereich des Läufers, wo der Wärmeaustausch / die Kühlung mit dem durch die zentrale Trägerwelle geführten Fluidkühlkreislauf stattfindet, ist sowohl in einer Innen-, als auch in einer Außenläuferanordnung der Maschine zu realisieren. Eine solche Außenläufervariante ist insbesondere bei kurz bauenden Anordnungen vorteilhaft.

Weitere Ausgestaltungen sind in den abhängigen Ansprüchen angegeben.

Der Träger ist in einer Innenläuferkonfiguration als wenigstens ein an der Läuferwelle drehfest zum Beispiel als gehaltenes Trägerblech ausgestaltet. In einer Außenläuferkonfiguration ist der Träger als wenigstens ein an der Läuferwelle drehfest gehaltenes Tragrohr ausgestaltet.

In einer Innenläuferkonfiguration steht die Wärmeleitschicht in thermischem Kontakt mit dem wenigstens einem Trägerblech, und die Kühlfluid-Kanäle durchdringen das wenigstens eine Trägerblech zur Entwärmung der Wärmeleitschicht. In einer Außenläuferkonfiguration steht die Wärmeleitschicht in thermischem Kontakt mit wenigstens einem Ringbund, und die Kühlfluid-Kanäle durchdringen den wenigstens einen Ringbund zur Entwärmung der Wärmeleitschicht. Die Kühlfluid-Kanäle durchdringen den Läufer vorzugsweise in radialer und/oder axialer Richtung.

Die Maschine hat einen Permanentmagnet-Läufer und Wicklungen am Ständer. Die Ständerwicklungen erzeugen im Luftspalt der Maschine eine sinusförmige, je nach Betriebsart winkelabhängige magnetische Flussdichte. Wegen der Permanentmagnet-Erregung kann die PMSM auch aus dem Stand heraus unter Last anfahren. Für den Betrieb liefert ein digitaler Pulsweitenmodulations-Wechselrichter die erforderliche elektrische Leistung in entsprechender Phasenlage. Die Maschine ist in unterschiedlichen Varianten entweder drehzahlgeregelt oder drehmomentgeregelt zu betreiben.

Ein Kriterium bei der Dimensionierung der Permanentmagnete in der elektrischen Maschine ist deren Entmagnetisierungsfestigkeit. Die Entmagnetisierungsfestigkeit hängt erheblich von der Temperatur ab, der die Permanentmagnete im Betriebsfall ausgesetzt sind. Die Entmagnetisierung der Permanentmagnete erfolgt aufgrund von magnetischen Gegenfeldern, die bei elektronisch kommutierten elektrischen Maschinen von Ständerspulen erzeugt werden. Das Maß für die Entmagnetisierungsfestigkeit wird durch die Koerzitivfeldstärke definiert, die in hohem Maße temperaturabhängig ist und mit steigender Temperatur abfällt. Zur Erhöhung der Koerzitivfeldstärke enthalten die Permanentmagnete Seltene-Erden-Elemente.

In einer Variante ist der Läufer aus magnetisch zumindest nahezu unwirksamen Komponenten und magnetisch rückschlussfrei gestaltet. Dies führt zu den doppelten Flächenschüben im Vergleich zu üblichen elektrischen Maschinen-Auslegungen. Die Innenläufermaschine kommt ohne Magnetrückschluss aus und hat nur wenig lamelliertes, elektrisch schlecht leitendes Material zwischen der Läuferwelle und den radial weiter außenliegenden Läuferzahn-Elementen sowie den Permanentmagnet-Elementen.

In einer Variante der Innenläufermaschine ist zwischen jedem Trägerblech und der daran angrenzenden Wärmeleitschicht im Bereich nahe der Läuferwelle ein Dichtblech zur Versiegelung der Kühlfluid-Kanäle angeordnet, wobei insbesondere ein die Kühlfluid-Kanäle im Trägerblech enthaltender erster Bereich etwa 10% bis etwa 60% der radialen Erstreckung des Trägerblechs umfasst, an dem das Dichtblech anliegt.

In einer Variante der Innenläufermaschine sind in einem an den ersten Bereich angrenzenden zweiten Bereich des Trägerblechs radial nach außen weisende Speichen vorgesehen, die vorzugsweise an ihrem freien Ende jeweils eine Aufnahme für die Läuferzahn-Elemente aufweisen können.

In einer Variante hat jedes Permanentmagnet-Element eine im Querschnitt etwa kreisringsegmentförmige oder trapezförmige Gestalt, dessen kürzere konzentrische bzw. parallele Seite zum Luftspalt hin orientiert ist, und dessen beide schrägen Seiten zu jeweiligen gegengleichen schrägen Seiten zweier benachbarter Läuferzahn-Elemente hin orientiert sind. Dabei ist in einer Variante jedes der Permanentmagnet-Elemente magnetisch im Wesentlichen tangential orientiert, und zwei zueinander benachbarte Permanentmagnet-Elemente sind magnetisch entgegengesetzt orientiert. In einer Variante überragen zwei einander benachbarte Läuferzahn-Elemente das zwischen ihnen aufgenommene Permanentmagnet-Element in radialer Richtung zum Luftspalt hin, und vorzugsweise auch in Umfangsrichtung.

In einer Variante der Innenläufermaschine ist Läuferzahn-Element formschlüssig an der Aufnahme gehalten. In einer Variante weisen das Läuferzahn-Element und die Aufnahme Haken auf, die in eine Tasche greifen, in der sie zum Beispiel mit Verriegelungsstangen festgelegt sind.

In einer Variante der Innenläufermaschine haben die schrägen Seiten des Permanentmagnet-Elements und die gegengleichen schrägen Seiten zweier benachbarter Läuferzahn-Elemente einen Radialwinkel, der - materialabhängig - so dimensioniert ist, dass eine Selbsthemmung des Permanentmagnet-Elements und seiner benachbarten Läuferzahn-Elemente in radialer Richtung bewirkt wird. Die keilförmige Ausführung der Läuferzahn-Elemente und des Permanentmagnet-Elements kann eine Vorspannung des Läufers durch Selbsthemmung bewirken. Eine Beschleunigung des Läufers auf eine Schleuderdrehzahl von zum Beispiel 20000 Upm bei der Montage der Maschine kann das Permanentmagnet-Element zwischen den benachbarten Läuferzahn-Elementen radial nach außen treiben. Dort kann das Permanentmagnet-Element aufgrund der Selbsthemmung dann auch bei Nenndrehzahl im Betrieb verbleiben, wobei gilt: Schleuderdrehzahl > Nenndrehzahl. Da die Magnete bei der Schleuderdrehzahl ihre radial äußerste Position einnehmen, finden im anschließenden Normalbetrieb keine schwellende Belastung oder Durchmesser-Änderungen durch wechselnde Fliehkräfte statt.

Die Wärmeleitschicht bildet eine thermische Verbindung von dem Permanentmagnet-Element zu den Kühlfluid-Kanälen, und die Wärmeleitschicht hat einen Kontaktbereich, der mit einer radial inneren oder radial äußeren Seite des Permanentmagnet-Elements in Berührung steht. Die Wärmeleitschicht hat mehrere wärmeleitende Graphitfolien zur Reduzierung des Kühlmitteldurchmessers. In einer Variante ist als Kühlfluid ein Gemisch aus Wasser und Glykol von etwa 20/80 bis etwa 80/20, vorzugsweise 50/50 durch die Kühlfluid-Kanälen zu fördern.

In einer Variante der Innenläufermaschine bildet die Wärmeleitschicht etwa $\frac{1}{3}$ bis $\frac{2}{3}$, insbesondere etwa ½ des Volumens des Läufers in axialer Richtung.

In einer Variante ist das Permanentmagnet-Element durch gegeneinander isolierte Scheiben mit im Querschnitt streifen-, kreisringsegmentförmiger oder trapezförmiger Gestalt gebildet.

In einer Variante ist jedes Läuferzahn-Element aus lamelliertem und gegeneinander isoliertem eine Nickel-Eisen-, Silizium-Eisen- oder Kobalt-Eisen-Legierung enthaltendem Blechmaterial mit Blechdicken zwischen 0,025 und 0,5 mm, und/oder einer Koerzitivfeldstärke $\leq 1,6 \pm 1$ A/cm, und/oder einem spezifischen Widerstand von etwa $0,4 \pm 0,25$ $\Omega$ mm$^2$/m gebildet.

In einer Variante hat die Läuferwelle ein erstes Ende mit einer Stirnseite, die mittig einen Anschluss für eine die Läuferwelle zentral und der Länge nach durchdringende Kühlfluid-Zu- oder -Abführleitung aufweist. Diese Kühlfluid-Zu- oder -Abführleitung mündet im Bereich eines zweiten Endes der Läuferwelle in einen radial auskragenden ersten Ringbund mit mehreren axial orientierten Öffnungen. Die Öffnungen kommunizieren mit den Kühlfluid-Kanälen der Trägerbleche. Der erste Ringbund ist in einer Variante mit der Läuferwelle einstückig ausgebildet oder an ihr in Längs- und/oder Umfangsrichtung unverlierbar gehalten. Die Läuferwelle ist in einer Variante an ihrem Umfang im Bereich des ersten Endes einen Anschluss für eine die Läuferwelle hohlringförmig durchdringende Kühlfluid-Zu- oder -Abführleitung. Diese Kühlfluid-Zu- oder -Abführleitung mündet in eine oder mehrere radial orientierte Öffnungen, die mit den Kühlfluid-Kanälen der Trägerbleche kommunizieren. Diese Kühlfluid-Zu- oder -Abführleitung mündet in einer Variante im Bereich des ersten Endes der Läuferwelle in einen radial auskragenden zweiten Ringbund mit mehreren axial orientierten Öffnungen. Die Öffnungen kommunizieren mit den Kühlfluid-Kanälen der Trägerbleche. Der zweite Ringbund ist in einer Variante mit der Läuferwelle einstückig ausgebildet oder an ihr in Längs- und/oder Umfangsrichtung unverlierbar gehalten.

In einer Variante der Innenläufermaschine sind auf der Läuferwelle sitzende Läuferscheiben zueinander um einen Umfangswinkel versetzt auf der Läuferwelle gehalten. Dies dient dem Effekt einer Nutschrägung der elektrischen Maschine.

Als Felderregungsquelle dienen in einer Variante Permanentmagnete, insbesondere Seltenerden-Magnete in Gestalt von Neodym-Eisen-Bor (Nd 2 Fe 14 B), Samarium-Kobalt (SmCo 5 und Sm 2 Co 17), Samarium-Eisen-Stickstoff (Sm 2 Fe 18 N 3), Cerium-Kobalt (Ce Co 5), Eisen-Germanium (Fe 3 Ge), Barium- oder Strontiumferrit (Ba Fe 12 O 19; Fe 12 O 19 Sr) oder einer AlNi- oder AlNiCo-Legierung enthaltenden Magnete sind. Die Permanentmagnet-Elemente können auch Press-, Guss- oder Schnitt-Teile aus diesen Materialien sein.

Die auf der Läuferwelle sitzenden Läuferscheiben der Innenläufermaschine sind gegeneinander verspannt auf der Läuferwelle gehalten.

In einer Variante ist die Läuferwelle aus vorzugsweise gesintertem Metall gebildet. Alternativ oder kumulativ hat die Läuferwelle eine Versteifungsstruktur zwischen ihrer zentralen Kühlfluid-Zu- oder -Abführleitung und der Mantelfläche der Läuferwelle. Alternativ oder kumulativ ist die Läuferwelle als Additiv-Bauteil, vorzugsweise aus Titan enthaltendem Metall, etwa Ti-6Al-4V (auch bekannt als Ti64) gebildet, was eine hochfeste Titanlegierung ist und Titan, 6 Massenprozent Aluminium und 4 Massenprozent Vanadium enthält.

## Kurzbeschreibung der Figuren

Weitere Merkmale, Eigenschaften, Vorteile, Zweckmäßigkeiten der Vorrichtungen und der Verfahrensweisen sind der nachfolgenden Beschreibung in Verbindung mit der Zeichnung zu entnehmen. Auch mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen.

Hierbei zeigen:

Fig. 1 in einer schematischen Darstellung eine fluidgekühlte, mehrphasige permanenterregte Synchronmaschine als Anwendungsfall in einem Flugzeug-Antriebsstrang;
Fig. 2 in einer schematischen Längsschnitt-Darstellung die fluidgekühlte, mehrphasige permanenterregte Synchronmaschine, mit einem Ständer und einem Läufer in Innenläuferkonfiguration; und
Fig. 2a in einer schematischen Längsschnitt-Darstellung die fluidgekühlte, mehrphasige permanenterregte Synchronmaschine, mit einem Ständer und einem Läufer in Außenläuferkonfiguration; und

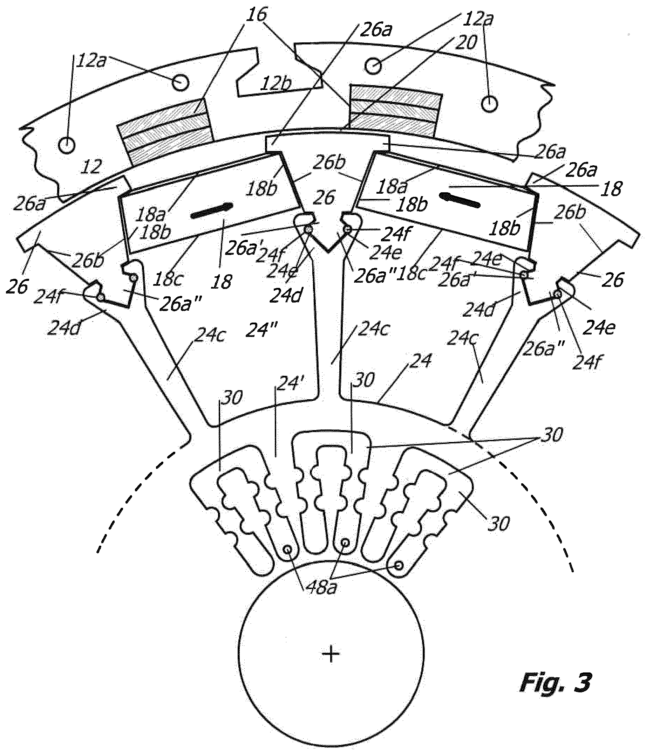

Fig. 3 in einer schematischen teilweisen Querschnitt-Darstellung die fluidgekühlte, mehrphasige permanenterregte Synchronmaschine aus Fig. 2.

## Detaillierte Beschreibung von Varianten der Vorrichtungen und der Verfahrensweisen

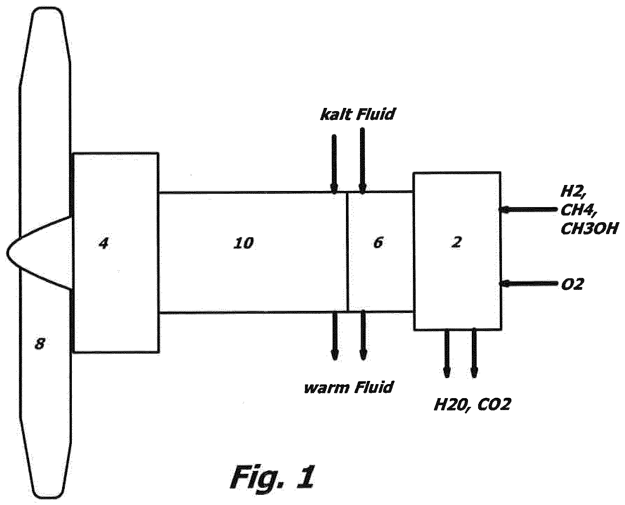

Fig. 1 veranschaulicht einen Flugzeug-Antriebsstrang, in dem ein elektrischer Flugzeugantrieb realisiert ist. Dieser Flugzeugantrieb ist Teil eines Flugzeug-Antriebsstrangs und umfasst eine hier auch offenbarte fluidgekühlte, permanentmagneterregte Synchronmaschine 10. Weitere Baugruppen des Flugzeug-Antriebsstrangs sind eine elektrische Energiequelle 2, die z.B. wie hier gezeigt als Wasserstoff-, Methan-, oder Methylalkohol-gespeistes Brennstoffzellenaggregat mit Wasser und/oder Kohlendioxid als Abgas ausgestaltet sein kann. Alternativ können auch zum Beispiel ein Akkumulator oder solarstromgespeiste Ultracaps zum Speisen des elektrischen Flugzeugantriebs mit elektrischer Energie vorgesehen sein. Zwischen die Energiequelle 2 und die Synchronmaschine 10 ein mehrphasiger Wechselrichter 6 geschaltet. Die Synchronmaschine 10 und der Wechselrichter 6 sind fluidgekühlt, wobei das Fluid durch einen nicht weiter veranschaulichten Wärmetauscher im Kreislauf geführt ist. Optional ist ein (Untersetzungs-)Getriebe 4 ist zwischen dem elektrischen Flugzeugantrieb und einer Luftschraube, einem Propeller oder einer Turbine 8 eingekoppelt. Abhängig von der Drehzahl-/Drehmoment-Auslegung der Synchronmaschine 10 kann das Getriebe 4 auch entfallen.

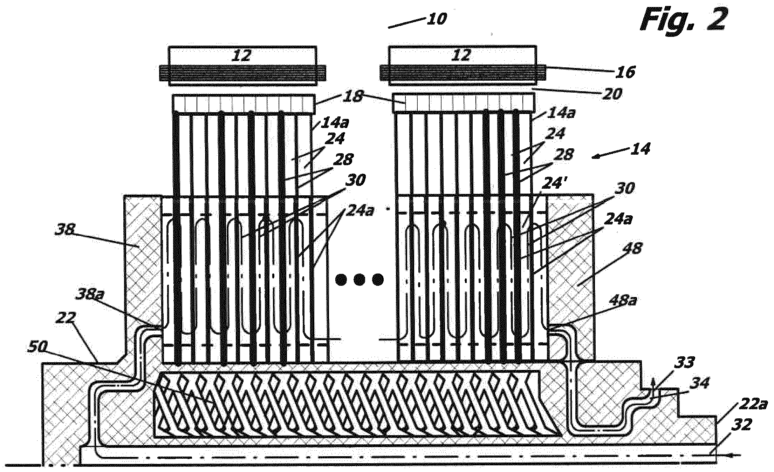

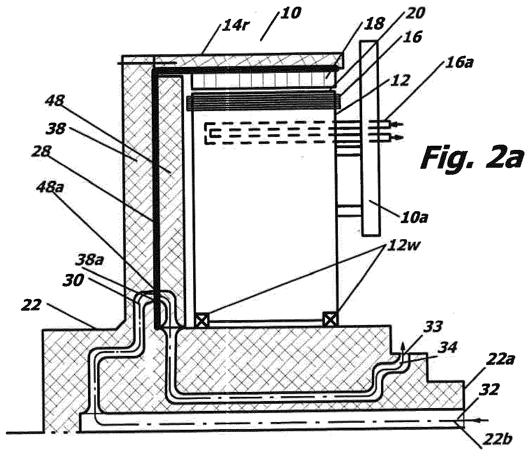

Fig. 2 veranschaulicht die fluidgekühlte, mehrphasige permanenterregte Synchronmaschine 10, mit einem Ständer 12 und einem Läufer 14 in Innenläuferkonfiguration. Eine solche PMSM ist zum Beispiel in dem Antriebsstrang der Fig. 1 einzusetzen. Der Ständer 12 der Synchronmaschine 10 hat zu bestromende Feldspulen 16, und der Läufer 14 hat Permanentmagnet-Elemente 18. Der Ständer 12 ist durch einen Luftspalt 20 von dem Läufer 14 radial beabstandet. Der Läufer 14 ist axial zum Beispiel in drei auf einer Läuferwelle 22 sitzende Läuferscheiben 14a unterteilt. Jede Läuferscheibe 14a umfasst einen Stapel aus Trägerblechen 24, die entlang ihres äußeren Umfangs eine Vielzahl Permanentmagnet-Elemente 18 und weichmagnetische Läuferzahn-Elemente 26 tragen. Die Trägerbleche 24 sind zumindest nahezu unmagnetisch, genauer gesagt paramagnetisch.

Zwischen jeweils zwei benachbarten Trägerblechen 24 ist eine von den Permanentmagnet-Elementen 18 zumindest bis nahe an die Läuferwelle 22 reichende Wärmeleitschicht 28 aufgenommen. Der Läufer 14 hat nahe der Läuferwelle 22 die Trägerbleche 24 der Läuferscheibe 14a radial und axial durchdringende Kühlfluid-Kanäle 30. Die Läuferwelle 22 hat mit den Kühlfluid-Kanälen 30 des Läufers 14 verbundene Kühlfluid-Zu- und/oder -Abführleitungen 32, 34.

Die Trägerbleche 24 des Läufers 14 sind in einer Variante aus einer Titan enthaltenden Legierung, etwa Ti-6Al-4V gebildet. An Stelle an einer Titanlegierung kann auch ein anderes Leichtbaumetall verwendet sein. Die Wärmeleitschicht 28 ist hier aus mehreren wärmeleitenden Graphitfolien gebildet. Somit ist der Läufer aus magnetisch zumindest nahezu unwirksamen Komponenten aufgebaut und magnetisch rückschlussfrei. Zwischen jedem Trägerblech 24 und der daran angrenzenden Wärmeleitschicht 28 ist im Bereich nahe der Läuferwelle 22 ein Dichtblech 24a angeordnet.

Ein die Kühlfluid-Kanäle 30 im Trägerblech 24 enthaltender erster Bereich 24' hat etwa 10% bis etwa 60% der radialen Erstreckung des Trägerblechs 24. An diesem Bereich liegt das Dichtblech 24a an. In einem an den ersten Bereich 24' angrenzenden zweiten Bereich 24" des Trägerblechs 24 sind radial nach außen weisende Speichen 24c vorgesehen. Diese Speichen 24c haben an ihrem freien Ende jeweils eine gabelförmige Aufnahme 24d für die Läuferzahn-Elemente 26.

Jedes Permanentmagnet-Element 18 hat eine im Querschnitt etwa kreisringsegmentförmige oder trapezförmige Gestalt, dessen kürzere konzentrische bzw. parallele Seite 18a zum Luftspalt 20 hin orientiert ist. Die beiden schrägen Seiten 18b des Permanentmagnet-Elements 18 sind zu jeweiligen gegengleichen schrägen Seiten 26a zweier benachbarter Läuferzahn-Elemente 26 hin orientiert. Jedes der Permanentmagnet-Elemente 18 ist magnetisch im Wesentlichen tangential orientiert, wobei zwei zueinander benachbarte Permanentmagnet-Elemente 18 magnetisch entgegengesetzt orientiert sind, wie dies durch die Richtungspfeile in den Permanentmagnet-Elementen 18 angedeutet ist. Die Läuferzahn-Elemente 26 wechseln sich in Umfangsrichtung mit den Permanentmagnet-Elementen 18 ab. In der gabelförmigen Aufnahme 24d jeder der Speichen 24c ist eines der Läuferzahn-Elemente 26 aufgenommen. Jeweils zwei einander benachbarte Läuferzahn-Elemente 26 überragen das zwischen ihnen aufgenommene Permanentmagnet-Element 18 in radialer Richtung zum Luftspalt 20 hin. Außerdem haben zwei einander benachbarte Läuferzahn-Elemente 26 Vorsprünge 26a, die das zwischen ihnen aufgenommene Permanentmagnet-Element 18 auch in Umfangsrichtung überragen und dessen Bewegung in radialer Richtung begrenzen.

Das Läuferzahn-Element 26 ist formschlüssig an der Aufnahme 24d gehalten. Dazu weisen das Läuferzahn-Element 26 und die Aufnahme 24d zwei Haken 26a', 26a" auf, die in eine Tasche 24e greifen, in der sie mit Verriegelungsstiften 24f, hier aus stabiler geeigneter Keramik festgelegt sind.

Die schrägen Seiten 18b des Permanentmagnet-Elements 18 und die gegengleichen schrägen Seiten 26b zweier benachbarter Läuferzahn-Elemente 26 haben einen Radialwinkel, der eine Selbsthemmung des Permanentmagnet-Elements 18 und seiner benachbarten Läuferzahn-Elemente 26 in radialer Richtung bewirkt. Die keilförmige Ausführung der Läuferzahn-Elemente und des Permanentmagnet-Elements bewirkt eine Vorspannung des Läufers durch Selbsthemmung. Dies gilt insbesondere, nachdem die Synchronmaschine 10 auf eine Schleuderdrehzahl > Nenndrehzahl von zum Beispiel 20 - 30 % höher als der Schleuderdrehzahl bei der Montage der Maschine gebracht wird. Dabei treibt die Fliehkraft das Permanentmagnet-Element 18 zwischen den benachbarten Läuferzahn-Elementen 26 radial nach außen gegen die Vorsprünge 26a der Läuferzahn-Elemente 26. Dort verbleibt das Permanentmagnet-Element 18 aufgrund der Selbsthemmung dann auch bei Nenndrehzahl im Betrieb der Synchronmaschine 10.

Die Wärmeleitschicht 28 bildet eine thermische Verbindung von den am Umfang des Läufers angeordneten Permanentmagnet-Elementen 18 - und den Läuferzahn-Elementen 26 - zu den Kühlfluid-Kanälen 28 nahe der Läuferwelle 22. Dabei hat die Wärmeleitschicht 28 einen in axialer Richtung abgewinkelten Kontaktbereich, der mit einer radial inneren Seite 18c des Permanentmagnet-Elements 18 in Berührung steht. Die Wärmeleitschicht 28 ist hier aus vorzugsweise mehreren wärmeleitenden Graphitfolien zur Reduzierung des Kühlmitteldurchmessers gebildet. Das heißt, das spezifisch schwerere Kühlfluid wird radial weiter innen geführt, was bei den hohen Nenn-Drehzahlen sich positiv auf die geringere Druckbelastung der Kühlfluidleitungen auswirkt. In axialer Richtung bildet die Wärmeleitschicht 28 etwa die Hälfte der axialen Länge des Läuferpaketes im Bereich der Speichen 24c des Läufers. Als Kühlfluid wird durch eine nicht weiter veranschaulichte Pumpe ein an den Einsatzfall angepasstes Kühlmittel mit geeignetem Durchsatz durch die Kühlfluid-Kanäle 28 gefördert.

Jedes Permanentmagnet-Element 18 ist durch gegeneinander elektrisch isolierte Scheiben von wenigen mm axialer Länge mit im Querschnitt kreisringsegmentförmiger oder trapezförmiger Gestalt gebildet. Die Permanentmagnet-Elemente 18 sind Seltenerden-Magnete in Gestalt von Neodym-Eisen-Bor ($Nd_2Fe_{14}B$), Samarium-Kobalt ($SmCo_5$ und $Sm_2Co_{17}$), Samarium-

Eisen-Stickstoff (Sm 2 Fe 18 N 3), Cerium-Kobalt (Ce Co 5), oder Eisen-Germanium (Fe 3 Ge), oder dergl. oder einer AlNi- oder AlNiCo-Legierung, oder aus Barium- oder Strontiumferrit (Ba Fe 12 O 19; Fe 12 O 19 Sr).

Jedes Läuferzahn-Element 26 ist aus lamelliertem und gegeneinander isoliertem eine Nickel-Eisen-, Silizium-Eisen- oder Kobalt-Eisen-Legierung enthaltendem Blechmaterial mit Blechdicken zwischen zum Beispiel 0,025 und 0,5 mm, und/oder einer Koerzitivfeldstärke von zum Beispiel etwa $\leq 1,6 \pm 1$ A/cm, und/oder einem spezifischen Widerstand von zum Beispiel etwa $0,4 \pm 0,25 \; \Omega \; mm^2/m$ gebildet.

Die Läuferwelle 22 hat ein erstes Ende mit einer Stirnseite 22a, die mittig einen Anschluss 22b für eine die Läuferwelle 22 zentral und der Länge nach durchdringende Kühlfluid-Zu- oder -Abführleitung 32 aufweist. Diese Kühlfluid-Zu- oder -Abführleitung 32 mündet im Bereich eines zweiten Endes der Läuferwelle 22 in einen radial auskragenden ersten Ringbund 38 mit mehreren axial orientierten Öffnungen 38a. Das zweite Ende 22b der Läuferwelle 22 ist das abtriebsseitige Ende der elektrischen Maschine 10. Der erste Ringbund 38 ist mit der Läuferwelle 22 einstückig ausgebildet. Alternativ ist er in Längs- und/oder Umfangsrichtung unverlierbar gehalten. Die axial orientierten Öffnungen 38a sind gleichmäßig in Umfangsrichtung des ersten Ringbunds 38 verteilt radial nahe der Läuferwelle 22 angeordnet. Die Öffnungen 38a kommunizieren mit den Kühlfluid-Kanälen 28 der Trägerbleche 24.

Die Läuferwelle 22 hat an ihrem Umfang im Bereich des ersten Endes einen Anschluss für eine die Läuferwelle 22 hohlringförmig durchdringende Kühlfluid-Zu- oder -Abführleitung 34. Diese Kühlfluid-Zu- oder -Abführleitung 34 führt im Bereich des ersten Endes der Läuferwelle 22 in einen radial auskragenden zweiten Ringbund 48 mit mehreren axial orientierten Öffnungen 48a. Diese Öffnungen 48a kommunizieren mit den Kühlfluid-Kanälen 28 der Trägerbleche 24. Die Kühlfluid-Zu- oder -Abführleitung 34 mündet in die mehreren radial orientierten Öffnungen 38b, die mit den Kühlfluid-Kanälen 28 der Trägerbleche 24 kommunizieren. Die auf der Läuferwelle 22 sitzenden Läuferscheiben 14a sind gegeneinander verspannt auf der Läuferwelle 22 gehalten. Dazu ist der zweite Ringbund 48 in Längs- und/ oder Umfangsrichtung unverlierbar an der Läuferwelle 22 mittels mit nicht weiter veranschaulichter Spannstangen gehalten, welche zu dem ersten Ringbund 38 durch die Trägerbleche 24 hindurchreichen. Überdies ist der zweite Ringbund 48 mittels nicht weiter veranschaulichter Verdrehsicherungen an der Läuferwelle 22 drehfest gehalten. Die auf der Läuferwelle 22 sitzenden Läuferscheiben 14a sind zueinander um einen Umfangswinkel versetzt auf der Läuferwelle 22 gehalten. Dies hat den Effekt einer Nutschrägung.

Die Läuferwelle 22 ist aus vorzugweise gesintertem Metall in 3D-Druck gefertigt und hat eine Versteifungsstruktur 50 zwischen der Kühlfluid-Zu- oder -Abführleitung 32, 34 und der Mantelfläche der Läuferwelle 22. Dazu ist die die Läuferwelle mit der Versteifungsstruktur als Additiv-Bauteil gebildet, hier zum Beispiel aus Titan enthaltendem Metall, Ti-6Al-4V. Diese Versteifungsstruktur 50 dient neben der Materialwahl der Gewichtsreduzierung und der Stabilität der Gesamtanordnung. Die Läuferwelle 22 hat an beiden Enden der Maschine 10 hier nicht weiter veranschaulichte (Schrägrollen-)Lager.

Die Feldspulen 16 sind bei einer Nenndrehzahl von zum Beispiel etwa 14000 - 16000 Upm mit einer Polwechselfrequenz von zum Beispiel etwa 3600 - 4200 aus dem Wechselrichter 6 zu bestromen. Der Wechselrichter 6 hat eine Leistungselektronik, die auf einen Lagerflansch (Schild B) der Maschine schwingend montiert, und dadurch vibrationsentkoppelt ist.

Dieser Aufbau erlaubt zum Beispiel eine Maschine 10 mit einem Drehmoment von mehr als etwa 380 Nm, die eine Gesamtlänge von etwa 450 mm einschließlich des Wechselrichters 6 und einen maximalen Durchmesser von etwa 300 mm hat. Die abgebbare Leistung im Dauerbetrieb der Maschine beträgt zum Beispiel etwa 500 - 800 kW bei einer Nenndrehzahl von etwa 12000 Upm bis etwa 18000 UPM, wobei die Gesamtmasse von Maschine und Wechselrichter 6 etwa 35 - 50 kg beträgt. Der Gesamtwirkungsgrad von Maschine 10 und Wechselrichter 6 kann dabei zum Beispiel etwa 96 % betragen, was eine hocheffiziente Maschine mit sehr gutem Leistungsgewicht und minimalem Bauraum darstellt.

Fig. 2a veranschaulicht eine fluidgekühlte, mehrphasige permanenterregte Synchronmaschine 10, mit einem Ständer 12 und einem Läufer 14 in Außenläuferkonfiguration. Eine solche Maschine ist auch beispielsweise in dem Antriebsstrang der Fig. 1 einsetzbar. Der innenliegende Ständer 12 der Synchronmaschine 10 hat zu bestromende Feldspulen 16, und der außenliegende Läufer 14 hat Permanentmagnet-Elemente 18. Der Ständer 12 ist durch einen Luftspalt 20 von dem Läufer 14 radial beabstandet. Der Läufer 14 ist mit der Läuferwelle 22 drehfest verbunden. Der Läufer 14 hat wenigstens ein zumindest nahezu unmagnetisches Tragrohr 14r. Das Tragrohr 14r trägt entlang seiner Innenwand eine Vielzahl Permanentmagnet-Elemente 18 und in der Fig. nicht veranschaulichte, weichmagnetische Läuferzahn-Elemente. Die Läuferzahn-Elemente wechseln sich in Umfangsrichtung mit den Permanentmagnet-Elementen 18 ab.

Die Läuferwelle 22 hat ein erstes Ende mit einer Stirnseite 22a, die mittig einen Anschluss 22b für eine die Läuferwelle 22 zentral und der Länge nach durchdringende Kühlfluid-Zu- oder -Abführleitung 32 aufweist. Diese Kühlfluid-Zu- oder -Abführleitung 32 mündet im Bereich eines zweiten Endes der Läuferwelle 22 in einen radial auskragenden ersten Ringbund 38 mit mehreren axial orientierten Öffnungen 38a. Die axial orientierten Öffnungen 38a sind gleichmäßig in Umfangsrichtung des ersten Ringbunds 38 verteilt radial nahe der Läuferwelle 22 angeordnet. Das zweite Ende der Läuferwelle 22 ist das abtriebsseitige Ende der elektrischen Maschine 10.

Der erste Ringbund 38 ist mit der Läuferwelle 22 einstückig ausgebildet. Alternativ ist der erste Ringbund 38 in Längs- und/ oder Umfangsrichtung der Läuferwelle 22 an dieser unverlierbar gehalten. Ein radial auskragender zweiter Ringbund 48 ist in geringem Abstand zu dem ersten Ringbund 38 ist in Längsrichtung der Läuferwelle 22 an dieser verschiebbar gehalten. Der zweite Ringbund 48 ist mit mehreren axial orientierten Öffnungen 48a versehen. Zwischen dem ersten Ringbund 38 und dem zweiten Ringbund 48 ist eine von den Permanentmagnet-Elementen 18 zumindest bis nahe an die Läuferwelle 22 reichende Wärmeleitschicht 28 aufgenommen. Durch Aussparungen in der Wärmeleitschicht 28 stehen die Öffnungen 48a des zweiten Ringbunds 48 mit den Öffnungen 38a des ersten Ringbunds 38 in Fluidverbindung. So durchdringen den Läufer 14 nahe der Läuferwelle 22 Kühlfluid-Kanäle 30 in radialer und axialer Richtung. Diese Kühlfluid-Kanäle 30 des Läufers 14 sind mit den Kühlfluid-Zu- und/oder -Abführleitungen 32, 34 verbunden.

Jedes Permanentmagnet-Element 18 hat eine im Querschnitt etwa kreisringsegmentförmige oder trapezförmige Gestalt, dessen kürzere konzentrische bzw. parallele Seite zum Luftspalt 20 hin orientiert ist. Die beiden schrägen Seiten des Permanentmagnet-Elements 18 sind zu jeweiligen gegengleichen schrägen Seiten zweier benachbarter Läuferzahn-Elemente hin orientiert. Jedes der Permanentmagnet-Elemente 18 ist magnetisch im Wesentlichen tangential zum Innenumfang des Tragrohrs 14r orientiert, wobei zwei zueinander benachbarte Permanentmagnet-Elemente 18 magnetisch entgegengesetzt orientiert sind. Jeweils zwei einander benachbarte Läuferzahn-Elemente 26 überragen das zwischen ihnen aufgenommene Permanentmagnet-Element 18 in radialer Richtung zum Luftspalt 20 hin.

Die Wärmeleitschicht 28 bildet eine thermische Verbindung von den am Innenumfang des des Tragrohrs 14r des Läufers 14 angeordneten Permanentmagnet-Elementen 18 - und den Läuferzahn-Elementen 26 - zu den Kühlfluid-Kanälen 28 nahe der Läuferwelle 22. Dabei hat die Wärmeleitschicht 28 einen in axialer Richtung abgewinkelten Kontaktbereich, der mit einer radial äußeren Seite des Permanentmagnet-Elements 18 in Berührung steht. Die Wärmeleitschicht 28 ist hier aus vorzugsweise mehreren wärmeleitenden Graphitfolien zur Reduzierung des Kühlmitteldurchmessers gebildet. Das heißt, das Kühlfluid, welches spezifisch schwerer ist als die Wärmeleitschicht 28, wird radial weiter innen geführt, während die Wärmeleitschicht 28 bis radial nach außen zu den Permanentmagnet-Elementen 18 reicht. Das wirkt sich bei den hohen Nenn-Drehzahlen positiv auf die geringere Druckbelastung der Kühlfluidleitungen aus. Eine nicht weiter veranschaulichte Pumpe fördert ein an den Einsatzfall angepasstes Kühlmittel mit geeignetem Durchsatz durch die Kühlfluid-Kanäle 28.

Jedes Permanentmagnet-Element 18 ist durch gegeneinander elektrisch isolierte Scheiben von wenigen mm axialer Länge mit im Querschnitt kreisringsegmentförmiger oder trapezförmiger Gestalt gebildet. Die Permanentmagnet-Elemente 18 sind Seltenerden-Magnete in Gestalt von Neodym-Eisen-Bor ($Nd_2Fe_{14}B$), Samarium-Kobalt ($SmCo_5$ und $Sm_2Co_{17}$), Samarium-Eisen-Stickstoff ($Sm_2Fe_{18}N_3$), Cerium-Kobalt ($CeCo_5$), oder Eisen-Germanium ($Fe_3Ge$), oder dergl. oder einer AlNi- oder AlNiCo-Legierung, oder aus Barium- oder Strontiumferrit ($BaFe_{12}O_{19}$; $Fe_{12}O_{19}Sr$).

Jedes Läuferzahn-Element ist aus lamelliertem und gegeneinander isoliertem, eine Nickel-Eisen-, Silizium-Eisen- oder Kobalt-Eisen-Legierung enthaltendem Blechmaterial mit Blechdicken zwischen zum Beispiel 0,025 und 0,5 mm, und/oder einer Koerzitivfeldstärke von zum Beispiel etwa $\leq 1,6 \pm 1$ A/cm, und/oder einem spezifischen Widerstand von zum Beispiel etwa $0,4 \pm 0,25 \Omega \ mm^2/m$ gebildet.

Die Läuferwelle 22 ist aus vorzugweise gesintertem Metall in 3D-Druck gefertigt und hat eine in der Fig. 22a nicht weiter veranschaulichte Versteifungsstruktur analog zu der Versteifungsstruktur 50 in Fig. 2 zwischen der Kühlfluid-Zu- oder -Abführleitung 32, 34 und der Mantelfläche der Läuferwelle 22. Dazu ist die die Läuferwelle mit der Versteifungsstruktur als Additiv-Bauteil gebildet, hier aus Titan enthaltendem Metall, Ti-6Al-4V. Diese Versteifungsstruktur dient neben der Materialwahl der Gewichtsreduzierung und der Stabilität der Gesamtanordnung. Die Läuferwelle 22 hat an beiden Enden der Maschine 10 hier nicht weiter veranschaulichte (Schrägrollen-)Lager.

Der Ständer 12 ist an dem in der Fig. 2a nur teilweise gezeigten Gehäuse 10a ortsfest gehalten. Des Weiteren ist der Ständer 12 mittels zweier Wälzlager 12w auf der Läuferwelle 22 relativ zu dieser drehbar gelagert, so dass sich die Läuferwelle 22 mit dem Läufer relativ zum Ständer 12 drehen kann. Der Ständer 12 ist zumindest in seinem radial äußeren Bereich 12a als lamelliertes Blechpaket ausgestaltet und trägt Feldspulen 16.

Die Feldspulen 16 sind bei einer Nenndrehzahl von zum Beispiel etwa 14000 - 16000 Upm mit einer Polwechselfrequenz von zum Beispiel etwa 3600 - 4200 Hz aus dem Wechselrichter 6 zu bestromen. Der Wechselrichter 6 hat eine Leistungselektronik, die auf einen Lagerflansch (Schild B) der Maschine schwingend montiert, und dadurch vibrationsentkoppelt ist.

Die vorangehend beschriebenen Varianten der Vorrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, kombiniert werden, solange diese Kombination in den Schutzumfang der Ansprüche fällt.

**Patentansprüche**

1. Eine fluidgekühlte, mehrphasige permanenterregte Synchronmaschine (10), mit einem Ständer (12) und einem Läufer (14) in Außen- oder Innenläuferkonfiguration; wobei

   - der Ständer (12) zu bestromende Feldspulen (16), und der Läufer (14) Permanentmagnet-Elemente (18) aufweist, und der Ständer (12) unter Bildung eines Luftspaltes (20) von dem Läufer (14) radial beabstandet ist;
   - der Läufer (14) wenigstens einen die Permanentmagnet-Elemente (18) und weichmagnetische Läuferzahn-Elemente (26) tragenden, zumindest nahezu unmagnetischen Träger umfasst; und
   - eine Wärmeleitschicht (28) von der vom Luftspalt (20) abliegenden Seite der Permanentmagnet-Elemente (18) und/oder der Läuferzahn-Elemente (26) bis nahe an die Läuferwelle (22) reicht, und
   - nahe der Läuferwelle (22) der Läufer (14) ihn durchdringende Kühlfluid-Kanäle (30) aufweist; und
   - die Läuferwelle (22) mit den Kühlfluid-Kanälen (30) des Läufers (14) verbundene Kühlfluid-Zu- und/oder -Abführleitungen (32, 34) aufweist, und wobei
   - der Träger

      - in einer Innenläuferkonfiguration als wenigstens ein an der Läuferwelle (22) drehfest gehaltenes Trägerblech (24); oder
      - in einer Außenläuferkonfiguration als wenigstens ein an der Läuferwelle (22) drehfest gehaltenes Tragrohr (14r) ausgestaltet ist; wobei
      - in einer Innenläuferkonfiguration die Wärmeleitschicht (28) in thermischem Kontakt mit dem wenigstens einen Trägerblech (24) steht, und die Kühlfluid-Kanäle (30) das wenigstens eine Trägerblech (24) zur Entwärmung der Wärmeleitschicht (28) durchdringen; oder
      - in einer Außenläuferkonfiguration die Wärmeleitschicht (28) in thermischem Kontakt mit wenigstens einem Ringbund steht, und die Kühlfluid-Kanäle (30) den wenigstens einen Ringbund zur Entwärmung der Wärmeleitschicht (28) durchdringen,

   - die Wärmeleitschicht (28) eine thermische Verbindung von dem Permanentmagnet-Element (18) zu den Kühlfluid-Kanälen (30) bildet, und die Wärmeleitschicht (28) einen Kontaktbereich aufweist, der in einer Innenläuferkonfiguration mit einer radial inneren Seite (18c) und in einer Außenläuferkonfiguration mit einer radial äußeren Seite des Permanentmagnet-Elements (18) in Berührung steht, und

      - die Wärmeleitschicht (28) mehrere wärmeleitende Graphitfolien zur Reduzierung des Kühlmitteldurchmessers umfasst.

2. Die fluidgekühlte, mehrphasige permanenterregte Synchronmaschine (10) nach einem der vorhergehenden Ansprüche, wobei

      - der Läufer aus magnetisch zumindest nahezu unwirksamen Komponenten und magnetisch rückschlussfrei gestaltet ist; und/oder
      - der Läufer (14) axial in zwei oder mehr auf einer Läuferwelle (22) sitzende Läuferscheiben (14a) unterteilt ist; und/oder
      - zwischen jedem Trägerblech (24) und der daran angrenzenden Wärmeleitschicht (28) im Bereich nahe der Läuferwelle (22) ein Dichtblech (24a) angeordnet ist; und/oder
      - ein die Kühlfluid-Kanäle (30) im Trägerblech (24) enthaltender erster Bereich (24') etwa 10% bis etwa 60% der radialen Erstreckung der Trägerblech (24) umfasst, an dem das Dichtblech (24a) anliegt; und/oder
      - in einem an den ersten Bereich (24') angrenzenden zweiten Bereich (24") des Trägerblechs (24) radial nach außen weisende Speichen (24c) vorgesehen sind, die an ihrem freien Ende jeweils eine Aufnahme (24d) für die Läuferzahn-Elemente (26) aufweisen.

3. Die fluidgekühlte, mehrphasige permanenterregte Synchronmaschine (10) nach einem der vorhergehenden Ansprüche, bei der

      - jedes Permanentmagnet-Element (18) eine im Querschnitt etwa kreisringsegmentförmige oder trapezförmige Gestalt hat, dessen kürzere konzentrische bzw. parallele Seite (18a) zum Luftspalt (20) hin orientiert ist, und dessen beide schrägen Seiten (18b) zu jeweiligen gegengleichen schrägen Seiten (26a) zweier benachbarter Läuferzahn-Elemente (26) hin orientiert sind;
      - wobei jedes der Permanentmagnet-Elemente (18) magnetisch im Wesentlichen tangential orientiert ist, und zwei zueinander benachbarte Permanentmagnet-Elemente (18) magnetisch entgegengesetzt orientiert sind; und/oder
      - zwei einander benachbarte Läuferzahn-Elemente (26) überragen das zwischen ihnen aufgenommene Permanentmagnet-Element (18) in radialer Richtung zum Luftspalt (20) hin, und vorzugsweise auch in Umfangsrichtung; und/oder bei der vorzugsweise

- das Läuferzahn-Element (26) formschlüssig an der Aufnahme (24d) gehalten ist, insbesondere weisen das Läuferzahn-Element (26) und die Aufnahme (24d) Haken (26a', 26a") auf, die in eine Tasche (24e) greifen, in der sie mit Verriegelungsstangen (24f) festgelegt sind; und/oder bei der vorzugsweise

- die schrägen Seiten (18b) des Permanentmagnet-Elements (18) und die gegengleichen schrägen Seiten (26b) zweier benachbarter Läuferzahn-Elemente (26) einen Radialwinkel haben, der eine Selbsthemmung des Permanentmagnet-Elements (18) und seiner benachbarten Läuferzahn-Elemente (26) in radialer Richtung bewirkt, und/oder

- die keilförmige Ausführung der Läuferzahn-Elemente und des Permanentmagnet-Elements eine Vorspannung des Läufers durch Selbsthemmung bewirkt.

4. Die fluidgekühlte, mehrphasige permanenterregte Synchronmaschine (10) nach einem der vorhergehenden Ansprüche, bei der

- die Wärmeleitschicht (28) in axialer Richtung etwa ⅓ bis $^2/_3$, insbesondere ½ der axialen Erstreckung des Läufers erfüllt.

5. Die fluidgekühlte, mehrphasige permanenterregte Synchronmaschine (10) nach einem der vorhergehenden Ansprüche, bei der

- das oder jedes Permanentmagnet-Element (18) durch gegeneinander isolierte Scheiben gebildet ist, und/oder

- jedes Läuferzahn-Element (26) aus lamelliertem und gegeneinander isoliertem eine Nickel-Eisen-, Silizium-Eisen- oder Kobalt-Eisen-Legierung enthaltendem Blechmaterial mit Blechdicken zwischen 0,025 und 0,5 mm, und/oder einer Koerzitivfeldstärke ≤ 1,6 ± 1 A/cm, und/oder einem spezifischen Widerstand von etwa $0,4 \pm 0,25 \, \Omega \, mm^2/m$ gebildet ist, und/oder

- die Permanentmagnet-Elemente (18) Seltenerden-Magnete in Gestalt von Neodym-Eisen-Bor (Nd 2 Fe 14 B), Samarium-Kobalt (SmCo 5 und Sm 2 Co 17), Samarium-Eisen-Stickstoff (Sm 2 Fe 18 N 3), Cerium-Kobalt (Ce Co 5), Eisen-Germanium (Fe 3 Ge), Barium- oder Strontiumferrit (Ba Fe 12 O 19; Fe 12 O 19 Sr) oder einer AlNi- oder AlNiCo-Legierung enthaltenden Magnete sind.

6. Die fluidgekühlte, mehrphasige permanenterregte Synchronmaschine (10) nach einem der vorhergehenden Ansprüche, bei der

- die Läuferwelle (22) ein erstes Ende mit einer Stirnseite (22a) aufweist, die mittig einen Anschluss für eine die Läuferwelle (22) zentral und der Länge nach durchdringende Kühlfluid-Zu- oder -Abführleitung (32, 34) aufweist, wobei

-- diese Kühlfluid-Zu- oder -Abführleitung (32, 34) im Bereich eines zweiten Endes der Läuferwelle (22) in einen radial auskragenden ersten Ringbund (38) mit mehreren axial orientierten Öffnungen (38a) mündet,
-- die Öffnungen (38a) mit den Kühlfluid-Kanälen (30) der Trägerbleche (24) kommunizieren, und
-- der erste Ringbund (38) mit der Läuferwelle (22) einstückig ausgebildet ist oder an Längs- und/oder Umfangsrichtung unverlierbar gehalten ist.

7. Die fluidgekühlte, mehrphasige permanenterregte Synchronmaschine (10) nach einem der vorhergehenden Ansprüche, bei der

- die Läuferwelle (22) an ihrem Umfang im Bereich des ersten Endes einen Anschluss für eine die Läuferwelle (22) hohlringförmig durchdringende Kühlfluid-Zu- oder -Abführleitung (32, 34) aufweist, wobei

-- diese Kühlfluid-Zu- oder -Abführleitung (32, 34) in eine oder mehrere radial orientierte Öffnungen (38b) mündet, die mit den Kühlfluid-Kanälen (30) der Trägerbleche (24) kommunizieren,
-- diese Kühlfluid-Zu- oder -Abführleitung (32, 34) im Bereich des ersten Endes der Läuferwelle (22) in einen radial auskragenden zweiten Ringbund (48) mit mehreren axial orientierten Öffnungen (48a) mündet,
-- die Öffnungen (48a) mit den Kühlfluid-Kanälen (30) der Trägerbleche (24) kommunizieren, und

- der zweite Ringbund (48) mit der Läuferwelle (22) einstückig ausgebildet ist oder an Längs- und/oder Umfangsrichtung unverlierbar gehalten ist.

8. Die fluidgekühlte, mehrphasige permanenterregte Synchronmaschine (10) nach einem der vorhergehenden Ansprüche, bei der

- die auf der Läuferwelle (22) sitzenden Läuferscheiben (14a) sind zueinander um einen Umfangswinkel versetzt auf der Läuferwelle (22) gehalten, zum Effekt einer Nutschrägung, und/oder die auf der Läuferwelle (22) sitzenden Läuferscheiben (14a) sind gegeneinander verspannt auf der Läuferwelle (22) gehalten ist, und/oder
- die Läuferwelle (22) aus vorzugweise gesintertem Metall eine Versteifungsstruktur (50) zwischen der Kühlfluid-Zu- oder -Abführleitung (32, 34) und der Mantelfläche der Läuferwelle (22) aufweist, und/oder als Additiv-Bauteil, vorzugsweise aus Titan enthaltendem Metall, etwa Ti-6Al-4V gebildet ist.

9. Elektrischer Flugzeugantrieb umfassend eine fluidgekühlte, mehrphasige permanentmagneterregte Synchronmaschine nach einem der vorhergehenden Ansprüche.

**Claims**

1. A fluid-cooled, multi-phase, permanently excited synchronous machine (10) comprising a stator (12) and a rotor (14) in an external or internal rotor configuration; wherein

    - the stator (12) has field coils (16) to be energized, and the rotor (14) has permanent magnet elements (18), and the stator (12) is radially spaced from the rotor (14) to form an air gap (20);
    - the rotor (14) comprises at least one carrier which is at least almost nonmagnetic and which carries the permanent magnet elements (18) and soft magnetic rotor tooth elements (26); and
    - a heat-conducting layer (28) extends from the side of the permanent magnet elements (18) and/or the rotor tooth elements (26) facing away from the air gap (20) to close to the rotor shaft (22), and
    - near the rotor shaft (22) of the rotor (14), it has cooling fluid channels (30) penetrating it; and
    - the rotor shaft (22) has cooling fluid supply and/or discharge lines (32, 34) connected to the cooling fluid channels (30) of the rotor (14), and wherein
    - the carrier

        - in an internal rotor configuration, is designed as at least one carrier plate (24) held in a rotationally fixed manner on the rotor shaft (22); or
        - in an external rotor configuration, at least one support tube (14r) held in a rotationally fixed manner on the rotor shaft (22); wherein
        - in an internal rotor configuration, the heat-conducting layer (28) is in thermal contact with the at least one carrier plate (24), and the cooling fluid channels (30) penetrate the at least one carrier plate (24) to dissipate heat from the heat-conducting layer (28); or
- in an external rotor configuration, the heat-conducting layer (28) is in thermal contact with at least one ring bundle, and the cooling fluid channels (30) penetrate the at least one ring bundle to dissipate heat from the heat-conducting layer (28),

- the heat-conducting layer (28) forms a thermal connection from the permanent magnet element (18) to the cooling fluid channels (30), and the heat-conducting layer (28) has, in an internal rotor configuration, a contact area that is in contact with a radially inner side (18c) of the permanent magnet element (18) and, in an external rotor configuration, a contact area that is in contact with a radially outer side of the permanent magnet element (18), and

    - the heat-conducting layer (28) comprises a plurality of heat-conducting graphite foils for reducing the coolant diameter.

2. The fluid-cooled, multi-phase permanently excited synchronous machine (10) according to one of the preceding claims, wherein

    - the rotor is designed from magnetically at least nearly ineffective components and is magnetically closed-circuit-free; and/or
    - the rotor (14) is divided axially into two or more rotor discs (14a) seated on a rotor shaft (22); and/or
    - a sealing plate (24a) is arranged between each carrier plate (24) and the adjacent heat-conducting layer (28) in the area near the rotor shaft (22); and/or
    - a first region (24') containing the cooling fluid channels (30) in the carrier plate (24) comprises approximately 10% to approximately 60% of the radial extension of the carrier plate (24) against which the sealing plate (24a) rests; and/or
    - in a second region (24") of the carrier plate (24) adjacent to the first region (24'), radially outwardly directed spokes (24c) are provided, each of which has a receptacle (24d) for the rotor tooth elements (26) at its free end.

3. The fluid-cooled, multi-phase, permanently excited synchronous machine (10) according to one of the preceding claims, in which

    - each permanent magnet element (18) has a cross-sectional shape that is approximately circular ring segment-shaped or trapezoidal, with its shorter concentric or parallel side (18a) oriented toward the air gap (20) and its two sloping sides (18b) oriented toward respective opposite sloping sides (26a) of two adjacent rotor tooth elements (26);
- wherein each of the permanent magnet elements (18) is magnetically oriented substantially tangentially, and two adjacent permanent magnet elements (18) are magnetically oriented in opposite directions; and/or
- two adjacent runner tooth elements (26) protrude beyond the permanent magnet element (18) received between them in the radial direction toward the air gap (20) and preferably also in the circumferential direction; and/or preferably
- the rotor tooth element (26) is held in a form-fitting manner on the receptacle (24d), in particular, the rotor tooth element (26) and the receptacle (24d) have hooks (26a', 26a") which engage in a pocket (24e) in which they are fixed with locking rods (24f); and/or preferably
- the inclined sides (18b) of the permanent magnet element (18) and the opposite inclined sides (26b) of two adjacent runner tooth elements (26) have a radial angle that causes self-locking of the permanent magnet element (18) and its adjacent runner tooth elements (26) in the radial direction, and/or
- the wedge-shaped design of the rotor tooth elements and the permanent magnet element causes a preload of the rotor by self-locking.

4. The fluid-cooled, multi-phase, permanently excited synchronous machine (10) according to one of the preceding claims, in which

- the heat-conducting layer (28) in the axial direction covers approximately ⅓ to $\frac{2}{3}$ , in particular ½ of the axial extension of the rotor.

5. The fluid-cooled, multiphase permanently excited synchronous machine (10) according to one of the preceding claims, wherein

- the or each permanent magnet element (18) is formed by discs insulated from one another, and/or
- each rotor tooth element (26) is formed from laminated and mutually insulated sheet material containing a nickel-iron, silicon-iron, or cobalt-iron alloy with sheet thicknesses between 0.025 and 0.5 mm, and/or a coercive field strength $\leq$ 1.6 $\pm$ 1 A/cm, and/or a specific resistance of approximately 0.4 + 0.25 $\Omega$ mm$^2$/m, and/or
- the permanent magnet elements (18) are rare earth magnets in the form of neodymium-iron-boron ($Nd_2Fe_{14}B$), samarium-cobalt ($SmCo_5$ and $Sm_2Co_{17}$), samarium-iron-nitrogen ($Sm_2Fe_{18}N_3$), cerium-cobalt ($CeCo_5$), iron-germanium ($Fe_3Ge$), barium or strontium ferrite ($BaFe_{12}O_{19}$; $Fe_{12}O_{19}Sr$) or magnets containing an AlNi or AlNiCo alloy.

6. The fluid-cooled, multiphase, permanently excited synchronous machine (10) according to one of the preceding claims, wherein

- the rotor shaft (22) has a first end with an end face (22a) which has a connection in the center for a cooling fluid supply or discharge line (32, 34) which penetrates the rotor shaft (22) centrally and longitudinally, wherein

-- this cooling fluid supply or discharge line (32, 34) opens into a radially projecting first ring collar (38) with several axially oriented openings (38a) in the region of a second end of the rotor shaft (22),
-- the openings (38a) communicate with the cooling fluid channels (30) of the carrier plates (24), and
-- the first annular collar (38) is formed integrally with the rotor shaft (22) or is held captive in the longitudinal and/or circumferential direction.

7. The fluid-cooled, multi-phase, permanently excited synchronous machine (10) according to one of the preceding claims, in which

- the rotor shaft (22) has a connection at its circumference in the region of the first end for a cooling fluid supply or discharge line (32, 34) which penetrates the rotor shaft (22) in a hollow ring shape, wherein

-- this cooling fluid supply or discharge line (32, 34) opens into one or more radially oriented openings (38b) which communicate with the cooling fluid channels (30) of the carrier plates (24),
-- this cooling fluid supply or discharge line (32, 34) opens into a radially projecting second ring collar (48) with several axially oriented openings (48a) in the region of the first end of the rotor shaft (22),
-- the openings (48a) communicate with the cooling fluid channels (30) of the carrier plates (24), and

- the second annular collar (48) is formed integrally with the rotor shaft (22) or is held captive in the longitudinal and/or circumferential direction.

8. The fluid-cooled, multi-phase permanently excited synchronous machine (10) according to one of the preceding claims, in which

   - the rotor discs (14a) seated on the rotor shaft (22) are held on the rotor shaft (22) offset from one another by a circumferential angle to produce a nut inclination, and/or the rotor discs (14a) seated on the rotor shaft (22) are held on the rotor shaft (22) in a manner that they are braced against each other, and/or
   - the rotor shaft (22), preferably made of sintered metal, has a stiffening structure (50) between the cooling fluid supply or discharge line (32, 34) and the outer surface of the rotor shaft (22), and/or is formed as an additive component, preferably made of titanium-containing metal, such as Ti-6Al-4V.

9. Electric aircraft propulsion system comprising a fluid-cooled, multiphase, permanently magnetized synchronous machine according to one of the preceding claims.


**Revendications**

1. Une machine synchrone à excitation permanente, refroidie par fluide et à plusieurs phases (10), comprenant un stator (12) et un rotor (14) en configuration à rotor externe ou interne;

   - le stator (12) comporte des bobines de champ (16) à alimenter en courant, et le rotor (14) comporte des éléments à aimant permanent (18), et le stator (12) est espacé radialement du rotor (14) en formant un entrefer (20);
   - le rotor (14) comprend au moins un support au moins presque non magnétique portant les éléments magnétiques permanents (18) et des éléments de dents de rotor magnétiquement doux (26); et
   - une couche thermoconductrice (28) s'étend depuis le côté des éléments magnétiques permanents (18) et/ou des éléments de dents de rotor (26) éloigné de l'entrefer (20) jusqu'à proximité de l'arbre de rotor (22), et
   - près de l'arbre de rotor (22), le rotor (14) comporte des canaux de fluide de refroidissement (30) qui le traversent; et
   - l'arbre de rotor (22) comporte des conduites d'alimentation et/ou d'évacuation de fluide de refroidissement (32, 34) reliées aux canaux de fluide de refroidissement (30) du rotor (14), et
   - le support

      - dans une configuration à rotor interne, au moins une tôle de support (24) maintenue de manière solidaire en rotation sur l'arbre de rotor (22); ou
   - dans une configuration à rotor externe, au moins un tube de support (14r) maintenu de manière solidaire en rotation sur l'arbre de rotor (22); dans lequel
   - dans une configuration à rotor interne, la couche thermoconductrice (28) est en contact thermique avec la au moins une tôle de support (24) et les canaux de fluide de refroidissement (30) traversent la au moins une tôle de support (24) pour refroidir la couche thermoconductrice (28); ou
   - dans une configuration à rotor externe, la couche thermoconductrice (28) est en contact thermique avec au moins un anneau, et les canaux de fluide de refroidissement (30) traversent ledit au moins un anneau pour refroidir la couche thermoconductrice (28),

   - la couche thermoconductrice (28) forme une connexion thermique entre l'élément à aimant permanent (18) et les canaux de fluide de refroidissement (30), et la couche thermoconductrice (28) présente une zone de contact (28a) qui, dans une configuration à rotor interne, est en contact à l' e avec un côté radialement intérieur (18c) de l'élément à aimant permanent (18), et est en contact à l' e avec un côté radialement extérieur de l'élément à aimant permanent (18), et

      - la couche thermoconductrice (28) comprend plusieurs feuilles de graphite thermoconductrices pour réduire le diamètre du fluide de refroidissement.

2. La machine synchrone à excitation permanente, à refroidissement par fluide et à plusieurs phases (10) selon l'une des revendications précédentes, dans laquelle

   - le rotor est conçu à partir de composants magnétiquement au moins presque inefficaces et sans boucle magnétique; et/ou
   - le rotor (14) est divisé axialement en deux ou plusieurs disques de rotor (14a) montés sur un arbre de rotor (22); et/ou
   - une tôle d'étanchéité (24a) est disposée entre chaque tôle de support (24) et la couche thermoconductrice (28) adjacente à celle-ci dans la zone proche de l'arbre de rotor (22); et/ou
   - une première zone (24') contenant les canaux de fluide de refroidissement (30) dans la tôle de support (24) comprend environ 10 % à environ 60 % de l'extension radiale de la tôle de support (24) contre laquelle repose la tôle d'étanchéité (24a); et/ou

- dans une deuxième zone (24") de la tôle de support (24) adjacente à la première zone (24'), des rayons (24c) orientés radialement vers l'extérieur sont prévus, qui présentent chacun à leur extrémité libre un logement (24d) pour les éléments dentés (26) du rotor.

3. La machine synchrone à excitation permanente, refroidie par fluide et à plusieurs phases (10) selon l'une des revendications précédentes, dans laquelle

- chaque élément à aimant permanent (18) a une forme en coupe transversale approximativement en forme de segment d'anneau circulaire ou de trapèze, dont le côté concentrique ou parallèle le plus court (18a) est orienté vers l'entrefer (20) et dont les deux côtés obliques (18b) sont orientés vers les côtés obliques opposés respectifs (26a) de deux éléments de dent de rotor (26) adjacents;
- chacun des éléments à aimant permanent (18) étant orienté magnétiquement de manière essentiellement tangentielle, et deux éléments à aimant permanent (18) voisins l'un de l'autre étant orientés magnétiquement de manière opposée; et/ou
- deux éléments de dent de rotor (26) adjacents dépassent de l'élément à aimant permanent (18) logé entre eux dans la direction radiale vers l'entrefer (20), et de préférence également dans la direction circonférentielle; et/ou dans lequel, de préférence,
- l'élément de dent de rotor (26) est maintenu par complémentarité de forme sur le logement (24d), en particulier, l'élément de dent de rotor (26) et le logement (24d) présentent des crochets (26a', 26a") qui s'engagent dans une poche (24e) dans laquelle ils sont fixés avec des tiges de verrouillage (24f); et/ou dans lequel, de préférence
- les côtés inclinés (18b) de l'élément à aimant permanent (18) et les côtés inclinés opposés (26b) de deux éléments à dents de rotor adjacents (26) ont un angle radial qui provoque un autoblocage de l'élément à aimant permanent (18) et de ses éléments à dents de rotor adjacents (26) dans le sens radial, et/ou
- la conception en forme de coin des éléments dentés du rotor et de l'élément à aimant permanent provoque une précontrainte du rotor par autoblocage.

4. La machine synchrone à excitation permanente polyphasée refroidie par fluide (10) selon l'une des revendications précédentes, dans laquelle

- la couche thermoconductrice (28) s'étend dans la direction axiale sur environ ⅓ à $\frac{2}{3}$, en particulier la moitié de l'extension axiale du rotor.

5. La machine synchrone à excitation permanente, refroidie par fluide et à plusieurs phases (10) selon l'une des revendications précédentes, dans laquelle

- le ou chaque élément à aimant permanent (18) est formé par des disques isolés les uns des autres, et/ou
- chaque élément de dent de rotor (26) est formé d'un matériau en tôle laminée et isolée les uns des autres, contenant un alliage nickel-fer, silicium-fer ou cobalt-fer, avec des épaisseurs de tôle comprises entre 0,025 et 0,5 mm, et/ou une force coercitive $\leq 1,6 \pm 1$ A/cm, et/ou une résistivité d'environ $0,4 \pm 0,25\ \Omega$ mm$^2$ /m, et/ou
- les éléments magnétiques permanents (18) sont des aimants en terres rares sous forme de néodyme-fer-bore (Nd 2 Fe 14 B), samarium-cobalt (SmCo 5 et Sm 2 Co 17), samarium-fer-azote (Sm 2 Fe 18 N 3), cérium-cobalt (Ce Co 5), fergermanium (Fe 3 Ge), ferrite de baryum ou de strontium (Ba Fe 12 O 19; Fe 12 O 19 Sr) ou d'un alliage AlNi ou AlNiCo.

6. La machine synchrone à excitation permanente, refroidie par fluide et à plusieurs phases (10) selon l'une des revendications précédentes, dans laquelle

- l'arbre du rotor (22) présente une première extrémité avec une face frontale (22a) qui comporte au centre un raccord pour une conduite d'alimentation ou d'évacuation de fluide de refroidissement (32, 34) traversant l'arbre du rotor (22) de manière centrale et dans le sens de la longueur,

-- ce conduit d'alimentation ou d'évacuation de fluide de refroidissement (32, 34) débouche, dans la zone d'une deuxième extrémité de l'arbre de rotor (22), dans une première collerette annulaire (38) en saillie radiale comportant plusieurs ouvertures (38a) orientées axialement,
-- les ouvertures (38a) communiquent avec les canaux de fluide de refroidissement (30) des tôles de support (24) de manièr, et
-- la première collerette annulaire (38) est formée d'un seul tenant avec l'arbre de rotor (22) ou est maintenue de manière imperdable dans le sens longitudinal et/ou circonférentiel.

7. Machine synchrone à excitation permanente, à plusieurs phases et refroidie par fluide (10) selon l'une des revendications précédentes, dans laquelle

- l'arbre de rotor (22) présente, sur sa circonférence, dans la zone de la première extrémité, un raccord pour une conduite d'alimentation ou d'évacuation de fluide de refroidissement (32, 34) traversant l'arbre de rotor (22) sous la forme d'un anneau creux,

-- ce conduit d'alimentation ou d'évacuation de fluide de refroidissement (32, 34) débouche dans une ou plusieurs ouvertures (38b) orientées radialement qui communiquent avec les canaux de fluide de refroidissement (30) des tôles de support (24),
-- ce conduit d'alimentation ou d'évacuation de fluide de refroidissement (32, 34) débouche, dans la zone de la première extrémité de l'arbre de rotor (22), dans une deuxième collerette annulaire (48) en saillie radiale comportant plusieurs ouvertures (48a) orientées axialement,
-- les ouvertures (48a) communiquent avec les canaux de fluide de refroidissement (30) des tôles de support (24), et

- la deuxième couronne annulaire (48) est formée d'un seul tenant avec l'arbre de rotor (22) ou est maintenue de manière imperdable dans le sens longitudinal et/ou circonférentiel.

8. La machine synchrone à excitation permanente et à refroidissement par fluide (10) selon l'une des revendications précédentes, dans laquelle

- les disques de rotor (14a) montés sur l'arbre de rotor (22) sont maintenus sur l'arbre de rotor (22) en étant décalés les uns par rapport aux autres d'un angle circonférentiel, afin d'obtenir un biseautage de rainure, et/ou les disques de rotor (14a) montés sur l'arbre de rotor (22) sont maintenus sur l'arbre de rotor (22) en étant serrés les uns contre les autres, et/ou
- l'arbre rotatif (22), de préférence en métal fritté, présente une structure de renfort (50) entre la conduite d'alimentation ou d'évacuation du fluide de refroidissement (32, 34) et la surface d'enveloppe de l'arbre rotatif (22), et/ou est formé comme composant additif, de préférence en métal contenant du titane, par exemple Ti-6Al-4V.

9. Propulsion électrique d'avion comprenant une machine synchrone à excitation permanente, refroidie par fluide, et polyphasée, selon l'une des revendications précédentes.

kalt Fluid

warm Fluid

H2, CH4, CH3OH

O2

H20, CO2

**Fig. 1**

Fig. 2

**Fig. 2a**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014216241 A1
- WO 2007119952 A1
- DE 102008023999 A1
- JP 2020521425 A
- EP 3231070 B1
- EP 3618236 A2
- US 6175177 B1
- EP 3349331 A1
- US 2019123620 A1
- WO 2014039751 A1
- CN 102201718 B
- DE 102016218872 A1